# EUROPEAN PATENT APPLICATION

(11) **EP 1 182 553 A2**
(43) Date of publication of application: **27.02.2002**
(21) Application number: 01307205.3
(22) Date of filing: 24.08.2001
(51) Int. Cl.: G06F 9/50

(54) **Efficient assignment of processing resources in a fair queuing system**

(30) Priority: 24.08.2000 CA 2316643
(71) Applicant: Cognos Incorporated, Ottawa, Ontario K1G 4k9 (CA)
(72) Inventor: Seeds, Glen, Nepean, Ontario K2E 7B9 (CA)
(74) Representative: Gold, Tibor Z.

(57) **Abstract**

A method and system is provided for dispatching requests to processing resources. A processing resource has a current service type to process requests that have the current service type. When the processing resource is idle, it is determined whether the processing resource is to be switched to a different service type to process requests having the different service type. The processing resource is switched to the different service type when the switching is determined; and an outstanding request having the different service type is dispatched to the processing resource.

## Description

This invention relates to controlling of multi-processing servers, and more particularly, to efficient assignment of processing resources to queued requests in or for a fair queuing system.

### BACKGROUND OF THE INVENTION

There exist multi-processing server systems which are capable of serving many requests in parallel fashion. Requests may also be called tasks, jobs, loads, messages or consumers. A typical existing system uses multi-processing servers, all of which are capable of serving any type of request that is submitted to the system. Requests are processed by available servers as they are received by the system. When all servers become busy serving other requests, any new requests received by the system cannot be served as received. The system needs to handle those new outstanding requests. It is desirable to assign multi-processing servers and other processing resources in the system to those outstanding requests in a fair manner.

Some existing systems attempt to solve this problem by rejecting new requests when all servers are busy. Rejecting new requests is unfair because requests submitted later can be processed before rejected ones submitted earlier.

Some existing systems attempt to provide fair assignment by queuing outstanding requests in the order of receipt while they are waiting to be served. A typical existing system provides a single queue for all outstanding requests, regardless of how many servers are available. In this system, when a server becomes available, a request at the head of the queue is simply dispatched to that server.

Queuing outstanding requests is fairer compared to rejection of them. However, when there are high priority requests and low priority requests, these conventional systems often allow high priority requests to completely block low priority requests, or even the reverse. This common phenomenon is called "starvation". Some systems avoid the starvation problems by designing the system to handle requests in a fixed way, appropriate for a specific application and hardware configuration. This technique cannot be applied to other situations without a re-design.

Some systems work around the starvation problems by giving the administrator a high degree of instantaneous control over assignment of processing resources to requests. Such systems have a very high administrative cost to keep running well.

It is therefore desirable to provide a system which is capable of automatically assigning processing resources effectively and fairly to requests that exceed the system's capacity for concurrent processing.

### SUMMARY OF THE INVENTION

In computers, requests are served by running process instances of server programs. Each such process instance may serve more than one request concurrently, if the server program is multi-threaded. For the purpose of this invention, each such process of single-threaded programs or thread of multi-threaded programs is called a server instance. Each request has request parameters that determine the cost of preparing a server instance to serve the request, e.g., starting a particular program, opening files, connecting to particular external resources. In the present invention, those request parameters are identified and used collectively to define a service type.

The present invention enables configuration of server instances to serve requests of a different service type based on demand.

In accordance with an aspect of the present invention, there is provided a method for dispatching requests to processing resources. The method comprises steps of determining if a processing resource is idle, the processing resource having a current service type to process requests that have the current service type; determining if the processing resource is to be switched to a different service type to process requests having the different service type when the processing resource is idle; switching the processing resource to the different service type when the switching is determined; and dispatching an outstanding request having the different service type to the processing resource.

In accordance with another aspect of the invention, there is provided a method for dispatching queued requests to a predetermined number of server instances. The method comprises steps of determining if a server instance is idle, the server instance having a current service type to process requests that have the current service type; determining if the server instance is to be switched to a different service type to process requests having the different service type when the server instance is idle; switching the server instance to the different service type when the switching is determined; and dispatching a queued request having the different service type to the server instance.

In accordance with another aspect of the invention, there is provided a method for dispatching queued requests to a predetermined number of server instances. The method comprises steps of using a plurality of queues for queuing requests, each request having a service type, a service type being defined by a primary request parameter and one or more secondary request parameters, and each queue being used for queuing requests having a same primary request parameter; reserving a minimum number of server instance slots for each queue, each server instance slot representing a potential server instance, each server instance having a current service type; allocating one or more non-reserved server instance slots for one or more queues when the total number of server instances is larger than the sum of minimum numbers of reserved server instance slots for queues being used; reallocating a non-reserved server instance slot to a different queue when the non-reserved server instance slot is free; and dispatching a queued request from a queue to an idle server instance in a server instance slot allocated for the queue.

In accordance with another aspect of the invention, there is provided a request dispatching system for dispatching requests to processing resources. The request dispatching system comprises a processing resource controller having a switch controller for controlling switching of an idle processing resource having a current service type to a different service type; and a dispatching controller for dispatching an outstanding request having the different service type to the processing resource.

In accordance with another aspect of the invention, there is provided a request dispatching system for dispatching queued requests to a predetermined number of server instances. The request dispatching system comprises a server instance controller having a switch controller for controlling switching of an idle server instance having a current service type to a different service type; and a dispatching controller for dispatching an outstanding request having the different service type to the server instance..

Other aspects and features of the present invention will be readily apparent to those skilled in the art from a review of the following detailed description of preferred embodiments in conjunction with the accompanying drawings.

### BRIEF DESCRIPTION OF THE DRAWINGS

The invention will be further understood from the following description with reference to the drawings in which:
Figure 1 is a block diagram showing a system having a request dispatching system in accordance with an embodiment of the present invention;
Figure 2 is a block diagram showing an example of the request dispatching system;
Figure 2A is a diagram showing an example of a dispatching controller and a server process controller;
Figure 3 is a flowchart showing an example process of configuration of server instances;
Figure 4 is a flowchart showing an example process of selecting a queue;
Figure 5 is a flowchart showing another example process of selecting a queue; and
Figure 6 is a diagram showing an example system with two queues.

### DETAILED DESCRIPTION OF THE PREFERRED EMBODIMENTS

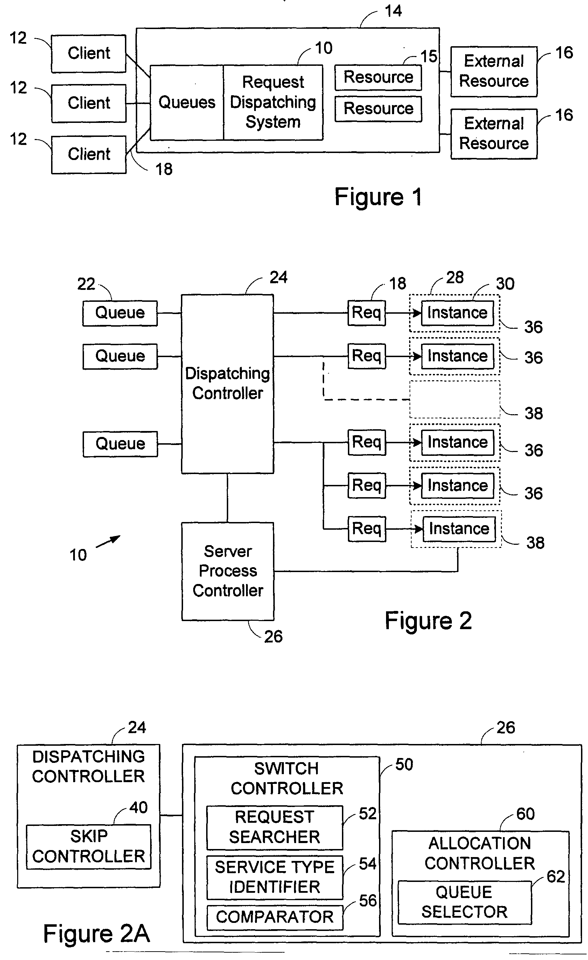

Referring to Figures 1 and 2, a request dispatching system 10 in accordance with an embodiment of the present invention is described. The request dispatching system 10 is provided in a computer system 14 to handle requests 18 received from one or more clients 12. The system 10 uses one or more queues 22, a dispatching controller 24 and a server instance controller 26.

The computer system 14 serves requests by running server instances. Figure 2 schematically shows multiple server instances 30. Potential server instances are schematically shown as server instance slots 28.

Requests 18 from clients 12 are queued in the queues 22 using a suitable queuing controller (not shown). The request dispatching system 10 dequeues requests and dispatches them to server instances 30. The dispatching controller 24 controls dispatching of requests from the queues 22 to server instances 30. The server instance controller 26 controls server instances 30, e.g., creation, allocation, preparation and/or activation/deactivation of server instances 30, as further described below.

The dispatching system 10 allows multiple requests to be processed in parallel by the multiple server instances 30. In this embodiment , a server instance 30 may represent a single-processing processor, a thread of a multiple-processing processor or any combination thereof. There may be one or more processors used in the system 10. In the case where the server instances 30 include multiple single-processing processors, each processor is configurable to serve different types of requests.

In order to process requests, the server instances 30 can use a finite number of processing resources 15 within the computer system 14. The resources 15 provided internally in the server unit 14 may include one or more Central Processing Units (CPUs), physical memory and virtual memory swap space. The resources 15 are allocated to server instances by the host operating system according to its allocation policies. These policies can be influenced by parameters that are specified by the request dispatching system 10. One such parameter is execution priority.

The physical memory available for application use (AM) is a configurable system parameter. It is not the total physical memory on the computer, but what is left after the system is up and running, with all applications loaded but idle. The amount of additional memory consumed by processing a request (RM) is also a configurable parameter.

Swap space is virtual memory (VM) disk space for handling swapping of server instances to and from physical memory. The virtual memory VM is also a configurable system parameter.

Server instances may also use one or more external resources 16, such as external servers, through external server connections.

It is desirable that processing resources are not only fairly allocated to requests, but also do not remain unused while there is a request available to which those resources can be applied.

The most precious processing resource 15 is usually CPUs. Accordingly, the dispatching system 10 in this embodiment minimizes the number of idle CPUs as long as there is a request to be served. However, the present invention may also be applied to other processing or related resources.

Each request has a service type. A service type is a collection of request parameters that determine the cost of preparing a server instance to serve the request. Preparation costs may be expressed in terms of real-time and other resources consumed by or reserved for the server instance. The commonly used service type of requests is defined by request priority alone. There are however situations where it is desirable to use two or more request parameters for controlling dispatching of requests. Among those request parameters defining the service type, there may be a primary parameter and one or more secondary parameters. In this embodiment, the service type is defined by request priority as a primary parameter and one or more secondary parameters. The invention may be used for different request parameters.

The service type of a request may be described using a set of attributes. Generic attributes may include interactive attributes, interactive or asynchronous attributes, and application-specific attributes. Additional generic attributes may be considered as balancing factors for balancing or distributing the processing activity among service instances 30. Such additional generic attributes may include those representing priority, age, preparation costs and execution cost. Other attributes may include averages of above factors, number of queued items of specified types, total number of queued items, number of idle server instances and/or CPU utilization.

Server instances 30 are not permanently reserved by service type. That is, an idle server instance 30 having a service type may be reconfigured or switched to a different service type. Switching of server instances 30 is controlled by the server instance controller 26 of the request dispatching system 10. The preparation costs for switching a server instance 30 to process a request that has the same primary parameter but different secondary parameters is relatively small, compared to the costs needed to switch the server instance 30 to process a request that has a different primary parameter. Accordingly, requests having same or similar service type, i.e., those having the same primary parameter, can be queued together.

Each queue 22 is used for queuing requests which have the same or similar service type. For example, each queue 22 may be used for queuing requests having the same primary parameter. Secondary parameters of requests queued in a queue 22 may not be the same.

In order to eliminate the starvation problems, the request dispatching system 10 reserves a minimum number NSPi of server instances 30 for each queue 22. This reservation is shown in Figure 2 as reserved slots 36. The minimum number NSPi is configurable for each queue 22 and may be one or more. The minimum number NSPi of server instance slots 28 is reserved regardless of whether or not there are requests outstanding for the same or similar service type having the same primary parameter. By reserving the minimum number NSPi of server instance slots 36 for each queue 22, the request dispatching system 10 can always allocate at least one server instance 30 to requests of each service type having a primary parameter. Thus, requests of one primary parameter are not blocked solely by requests of other primary parameter.

When the total number NS of active server instances 30 is larger than the sum of the minimum number NSPi of server instance slots 36 reserved for each queue 22, one or more additional server instance slots may be provided to one or more queues 22 in addition to the NSPi server instance slots 36. These additional server instance slots are shown in Figure 2 as non-reserved slots 38.

In order to assign processing resources fairly to requests while using available resources efficiently, the request dispatching system 10 dispatches each request to a server instance 30 based on a set of attributes that describe the service type of the request. As shown in Figure 2A, the request dispatching system 10 may have a skip controller 40 in the dispatching controller 24, and a switch controller 50 and an allocation controller 60 in the server process controller 26. Depending on the service type of outstanding requests and idle server instances 30, the request dispatching system 10 may use the skip controller 40 to skip one or more older requests in a queue 22 and dispatch a newer request in the same queue 22 to an idle server instance 30. The system 10 may use the switch controller 50 to switch the service type of an idle server instance 30 to a different service type having the same primary parameter to reuse it for a request having the different service type. Also, when a non-reserved slot 38 becomes free, the system 10 may use the allocation controller 60 to reallocate the non-reserved slot 38 to a different queue 22, depending on demand. The system 10 may use only one of the skipping, switching and reallocation functions, or may use a combination of these functions. As shown in Figure 2A, the switch controller 50 may have a request searcher 52 to search matching requests, a service type identifier 54 to identify the service type of outstanding requests, and a comparator 56 to evaluate switching costs of server instances. The allocation controller 60 may have a queue selector 62 to select queues for reallocation of non-reserved slots. These functions are further described below in detail.

When requests in a queue 22 have the same service type, i.e., both primary and secondary request parameters are equal among requests in the queue 22, requests within the queue 22 are processed in the order in which they arrive. However, when requests within a queue 22 have different secondary parameters, it may not be efficient to process the requests in the order of their arrival. When a server instance 30 is prepared for a service type, the first request in the corresponding queue 22 may not have a service type that matches that of the server instance 30. In that case, the request dispatching system 10 may allow skipping, i.e., dispatching of a request other than the first in the queue 22 if the other request has a matching service type.

Whenever a server instance 30 is idle and there are queued requests, then in some sense there are resources that are not being effectively used. However, an idle server instance 30 does not necessarily mean that one of the pending requests could be effectively serviced if dispatched immediately to the idle server instance 30; it depends on what it would cost to prepare that server instance 30 for use with the request in question.

If all incoming requests are directed to idle server instances 30 with a matching service type, then preparation costs are minimized or avoided, and processing time is improved correspondingly. If there is no server instance having a matching service type to outstanding requests in a queue 22, the request dispatching system 10 determines if it should switch the server instance 30 to a matching service type for one of the outstanding requests, depending on the preparation costs for the switching. For example, if it would cost 10 seconds to switch a first server instance 30 for the request at the head of the queue 22 and a second server instance 30 will likely become free in less than 10 seconds, and only takes 1 second to prepare the second server instance because it is a better service type match, then it is better to wait for that server instance to become free, rather than switching the first server instance 30.

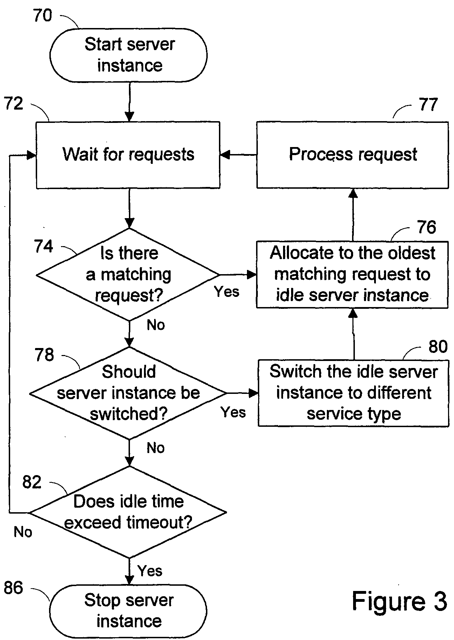

Figure 3 shows an example of switching of an idle server instance 30.

The server instance controller 26 starts or activates server instances 30 (70). Server instances 30 may be started as needed or at once. At this stage, server instances 30 are idle and wait for requests (72). The dispatching controller 24 checks if there is a request that has a service type matching to an idle server instance 30 (74). If there is one or more matching requests, the dispatching controller 24 dispatches the oldest request of the matching service type to the idle server instance 30 (76).

If there is no matching request (74), the server instance controller 26 determines whether it should switch the idle server instance 30 to a different service type having the same primary parameter for servicing a request in the queue (78). If the determination is affirmative, then the server instance controller 26 switches the service type of the idle server instance 30 to the different service type (80).

If the server instance controller 26 determines that the idle server instance 30 is not otherwise needed (78), it checks if the server instance 30 is idle for longer than a predetermined time period (82). If not, the server instance controller 26 lets the idle server instance 30 wait for a request with the matching service type (72).

If the server instance 30 is idle for longer than the predetermined time period (82), the server instance controller 26 terminates the idle server instance 30 (86).

If a very large number of service types and a large number of corresponding reserved server instances 30 are used in the request dispatching system 10, it would be difficult to manage them. A service type could be maintained as an ordered list of parameters, from most significant to least significant, and idle server instances could be matched to the request with the best service type match. However, applying the best match unconditionally would violate the requirement that requests be served in the order received. Accordingly, such a best matching method would not provide fair services to all requests.

By switching the service type of an idle server instance 30 when the oldest request has been outstanding for longer than an estimated time to accomplish the switching, the request dispatching system 10 can maintain a reasonable approximation of the queue order. Thus, fair service can be achieved.

In order for the switching of idle server instances 30, the minimum number NSPi is preferably set to (XB multiplied by NCPU). This setting allows to maximize state re-use of idle server instances 30. NCPU is the number of CPUs on each server computer in the system 14. XB is the number of active server instances per CPU, and it relates to connection to external resources 16, as described below.

To minimize switching costs, the total number NS of server instances 30 is preferably set as high as possible, but not so high that the working set for all active server instances 30 exceeds the available physical memory. In order to avoid excessive swapping or swap space overflow, the total number NS of active server instances 30 is set no higher than AM divided by RM. AM is the amount of the available physical memory, and RM is the amount of additional physical memory consumed during processing of a request, as described above.

The number of external resource connections may be managed by the total number NS of server instances. There may be a need to do this if, for example, there are license limits to the number of external server connections. Closing the connection when the local server instance is idle is also possible, but then re-opening them must be managed as part of the preparation cost.

A server instance 30 that uses external resources 16 will be blocked some fraction B of its running life, waiting for these external resources 16. In this embodiment, in order to ensure that this blockage does not result in an idle CPU, the number of active server instances per CPU is increased correspondingly, e.g. XB = 1/(1-B). For example, if local processes are blocked on external resources 50% of the time, 2 processes per local CPU are needed to keep all local CPU's busy. At 90% blocking, 10 processes per CPU are needed. Blocking factors substantially less than 50% are ignored.

In order to determine whether an idle server instance 30 should be switched to a different service type or wait to see if a matching request arrives at step 78 in Figure 3, it is preferable to invoke a balancing algorithm.

The balancing algorithm may use a zero cost method, simple cost method or actual cost method.

In the zero cost method, the dispatching system 10 assumes that the cost of switching a server instance 30 to a different service type is zero. In this approach, there is no balancing across server instances 30. This is the simplest balancing algorithm, and is the degenerate case.

In the simple cost method, a fixed estimate is used for the preparation cost for each service type. This method may be used for requests that already have estimated and/or average run costs. In this approach, an idle server instance 30 is switched when the request age exceeds the sum of the estimated preparation and run costs, expressed as real time.

In the actual cost method, actual preparation costs are measured, a running weighted average is computed for each service type, and the result is used as for the simple cost method.

If no balancing is indicated by the current queue contents, then the oldest request that is an exact type match for any available server instance 30 is dispatched to that server instance 30, regardless of the primary parameter, e.g., priority, of the service type. Interactive/asynchronous attributes may be considered as they are part of the service type, and have reserved server instances.

The need for balancing is indicated when a request age exceeds a threshold computed from the balancing factors. If balancing is required, then the request that most exceeds the balancing factors is selected for dispatching, and a server instance 30 is allocated, by either starting a new server instance (provided the limit has not been reached), or switching an available server instance having a service type of the closest match.

Optionally, request dispatching system 10 records and maintains estimates of request preparation costs.

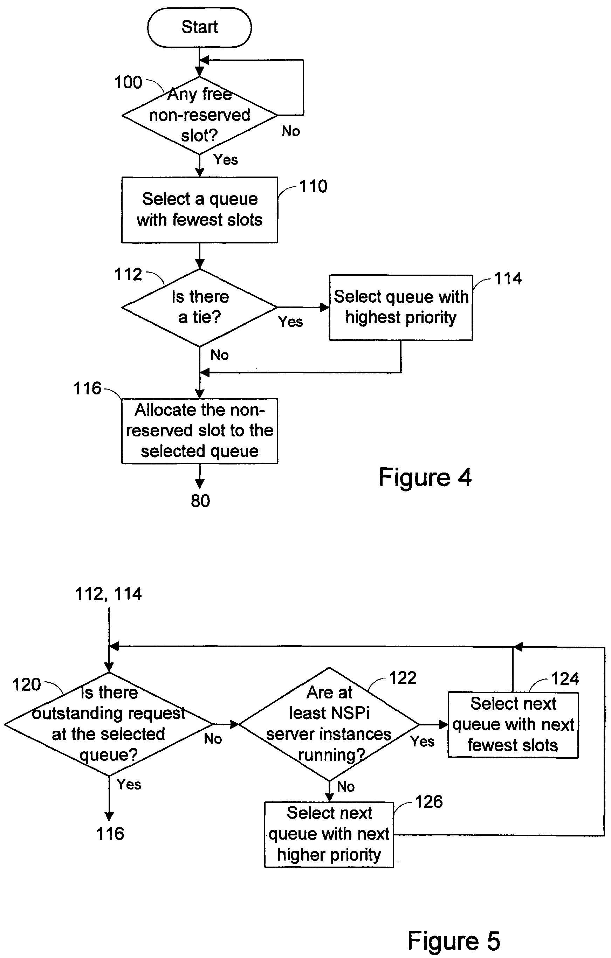

The reallocation function is now described referring to Figure 4. The request distributing system 10 may reallocate free non-reserved slots 38 to a different queue 22 having more demand.

When a non-reserved slot 38 becomes free (100), the dispatching system 10 selects a queue 22 that has the fewest allocated server instance slots 28, relative to the minimum number NSPi, i.e., the fewest allocated non-reserved slots 38 (110). For example, in an example having three priority queues, the minimum number NSPi may be set NSP1 = 1 for the low priority queue, NSP2 = 3 for the normal priority queue, and NSP3 = 4 for the high priority queue. If the numbers of server instance slots allocated to low, normal and high priority queues are three, three and five, respectively, then the low, normal and high priority queues have two, zero and one extra or non-reserved server instances, respectively, in addition to their minimum numbers NSPi of reserved server instances. Accordingly, the dispatching system 10 selects the normal priority queue.

In the case of a tie (112), the dispatching system 10 selects the highest priority queue among the ties (114). In the above example, if four server instance slots are allocated to the high priority queue, then the normal and high priority queues are tie. In this case, the dispatching system 10 selects the high priority queue.

Then, the dispatching system 10 allocates the non-reserved server instance slot 38 to the selected priority queue 22 (116).

Prior to allocating the non-reserved server instance slot 38 at step 116, as shown in Figure 5, the dispatching system 10 may check if there are any outstanding requests at the selected priority queue (120).

If there are no outstanding requests at that priority queue 22 (120), the dispatching system 10 further checks if there are at least the minimum number NSPi of server instances 30 running requests at that priority queue 22 (122). If yes, the dispatching system 10 selects the next priority queue 22 having the next fewest allocated server instance slots 28 (124) and returns to step 120.

Thus, the minimum number NSPi of server instance slots 36 are always provided for each queue 22. In other words, as long as NS is at least the total number NPQ of physical priority queues 22 in the dispatching system 10, and as long as the minimum number NSPi is at least 1 for each priority queue 22, then there is always at least one server instance slot 28 allocated to each priority, even if there are no outstanding requests at that priority. When a request arrives, it can always be dispatched immediately, unless there is already another request running at that priority.

If there is more than one queue 22 with free non-reserved server instance slots 38, requests at the highest priority are dispatched first.

Notwithstanding the above, the request dispatching system 10 may elect to skip a request, and look for a better match with the available idle server instance(s) 30. In this case, the request dispatching system 10 preferably manages the skipping such that the request is not skipped "indefinitely". "Indefinitely" in this context means an amount of time that is long relative to the time required to satisfy the request.

When the primary parameter of the service type is priority, the system 10 may allow "borrowing" of server instances 30 by a queue having a higher priority.

Referring back to Figure 5, if there are no outstanding requests at that priority queue 22 (120) and there are fewer than NSPi running requests at that priority (122), the dispatching system 10 may allow "borrowing" of the server instance 30 by a higher priority queue 22. That is, the dispatching system 10 selects the next priority queue 22 that is higher priority than that of the current queue 22 (126), and returns to step 120.

This allows a high-priority request to "borrow" server instance slots 28 from a lower priority queue 22, if there are no pending requests at the lower priority. This respects priority, but still avoids starvation, as long as that higher priority requests take a lot less time to run than lower priority requests and will therefore block a request at the "right" priority for only a "short" time.

The balancing algorithm may determine suitability of the "borrowing" of server instances 30 so that the number of server instance slots 28 of a given priority queue 22 may temporarily fall below the minimum number NSPi. This approach increases the potential for starvation to occur, and is used only with due care and attention to that issue.

### Example system with two queues

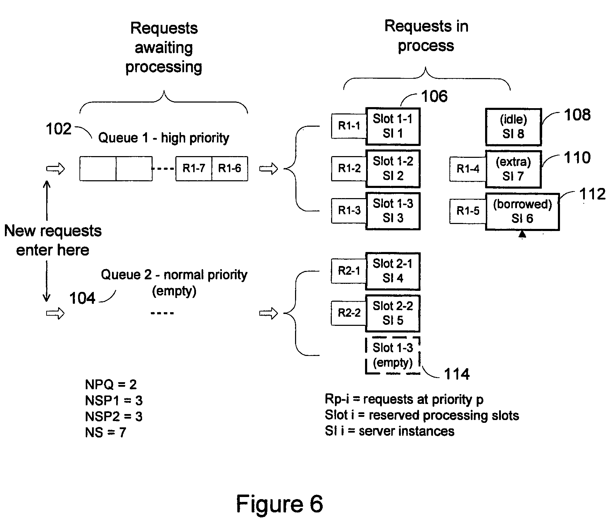

Figure 6 shows an example system 100 with two queues 102 and 104. The total number NPQ of physical queues is 2. Queue 102 is associated with high priority. The minimum number NSP1 for queue 102 is set to 3. It currently has two requests R1-6 and R1-7 queued. Queue 104 is associated with normal priority. The minimum number NSP1 for queue 104 is also set to 3. It is currently empty.

The total number NS of active service instances is set to 7. For queue 102, currently three server instances SI 1 to SI 3 at reserved slots1-1 to 1-3 (106) and an extra server instance S17 (110) at non-reserved slots are processing requests R1-1 to R1-3 and R1-4 (105). Server instance SI 8 is currently idle (108). Non-reserved slots are not shown in this drawing for the simplicity of illustration.

For queue 104, three slots 2-1 to 2-3 are reserved. However, only slots 2-1 and 2-2 have slot instances SI 4 and SI 5 which are processing requests R2-1 and R2-2. Since queue 104 is empty, server instance SI6 is borrowed by queue 102 (112) to process request R1-5. Thus, slot 2-3 is empty.

The server system of the present invention may be implemented by any hardware, software or a combination of hardware and software having the above described functions. The software code, either in its entirety or a part thereof, may be stored in a computer readable memory. Further, a computer data signal representing the software code which may be embedded in a carrier wave may be transmitted via a communication network. Such a computer readable memory and a computer data signal are also within the scope of the present invention, as well as the hardware, software and the combination thereof.

While particular embodiments of the present invention have been shown and described, changes and modifications may be made to such embodiments without departing from the true scope of the invention.

## Claims

1. A method for dispatching requests to processing resources, the method comprising steps of:
determining if a processing resource is idle, the processing resource having a current service type to process requests that have the current service type;
determining if the processing resource is to be switched to a different service type to process requests having the different service type when the processing resource is idle;
switching the processing resource to the different service type when the switching is determined; and
dispatching an outstanding request having the different service type to the processing resource.

2. The method as claimed in claim 1, wherein the switch determining step comprises the steps of:
determining if there is an outstanding request having the current service type; and
identifying a service type of a currently outstanding request when there is no outstanding request having the current service type; and
determining that the processing resource is to be switched to the identified service type.

3. The method as claimed in claim 2, wherein the switch determining step determines not to switch the processing resource when a request having the current service type is expected to arrive in a shorter period than a period for switching the processing resource to the identified service type.

4. The method as claimed in claim 1, wherein a service type is defined by a primary request parameter and one or more secondary request parameters, and the switching step switches the processing resource to the different service type that has a same primary request parameter as the current service type.

5. The method as claimed in claim 4 further comprising a step of queuing requests in a plurality of queues, each queue being used for queuing requests having a same primary request parameter.

6. The method as claimed in claim 5, wherein the switch determining step comprises steps of:
determining if there is a queued request having the current service type in a queue; and
identifying a service type of a currently queued request when there is no queued request having the current service type in the queue; and
determining that the processing resource is to be switched to the identified service type.

7. The method as claimed in claim 6, wherein the identifying step identifies a service type of a first queued request which is the head of the queue.

8. The method as claimed in claim 6, wherein the switch determining step determines not to switch the processing resource when a request having the current service type is expected to arrive in a shorter period than a period for switching the processing resource to the identified service type.

9. The method as claimed in claim 6, wherein the switch determining step determines if the server instance is to be switched by invoking a balancing algorithm using preparation costs for switching the processing resource to the identified service type.

10. The method as claimed in claim 1 further comprising a step of allowing dispatching of an outstanding request having the current service type from a queue prior to one or more outstanding requests that have a different service type and arrived at the queue before the outstanding request having the current service type.

11. The method as claimed in claim 1 further comprising a step of terminating the processing resource if the processing resource is determined not to switched and it is idle for longer than a predetermined time period.

12. A method for dispatching queued requests to a predetermined number of server instances, the method comprising steps of:
determining if a server instance is idle, the server instance having a current service type to process requests that have the current service type;
determining if the server instance is to be switched to a different service type to process requests having the different service type when the server instance is idle;
switching the server instance to the different service type when the switching is determined; and
dispatching a queued request having the different service type to the server instance.

13. The method as claimed in claim 12, wherein a service type is defined by a primary request parameter and one or more secondary request parameters, and requests are queued in a plurality of queues, each queue being used for queuing requests having a same primary request parameter; and
the switch determining step comprises the steps of:
determining, for a queue, if there is a queued request having the current service type; and
identifying a service type of a currently queued request when there is no queued request having the current service type; and
determining if the server instance is to be switched based on the identified service type.

14. The method as claimed in claim 13, wherein the identifying step identifies a service type of a first queued request which is the head of the queue.

15. The method as claimed in claim 13, wherein the switch determining step determines not to switch the server instance when a request having the current service type is expected to arrive in a shorter period than a period for switching the server instance to the identified service type.

16. The method as claimed in claim 13, wherein the switch determining step determines if the server instance is to be switched by invoking a balancing algorithm using preparation costs for switching the server instance to the identified service type.

17. The method as claimed in claim 12 further comprising a step of allowing dispatching of a queued request having the current service type from a queue prior to one or more queued requests that have a different service type and arrived at the queue before the queued request having the current service type.

18. The method as claimed in claim 12 further comprising a step of terminating the server instance if the server instance is determined not to switched and it is idle for longer than a predetermined time period.

19. The method as claimed in claim 12 further comprising steps of:
reserving a minimum number of server instance slots for each queue, each server instance slot representing a potential server instance; and
allocating one or more non-reserved server instance slots for one or more queues when the total number of server instances is larger than the sum of minimum numbers of reserved server instance slots for queues being used.

20. The method as claimed in claim 19 further comprising a step of:
reallocating a non-reserved server instance slot to a different queue when the non-reserved server instance slot is free.

21. The method as claimed in claim 20, wherein the reallocating step comprises steps of:
selecting a queue having fewest allocated non-reserved server instance slots; and
reallocating the non-reserved server instance slot to the selected queue.

22. The method as claimed in claim 21, wherein primary request parameters of service types relate to priority, and the selecting step selects a higher queue having a higher priority primary request parameter if there are multiple queues having the fewest allocated non-reserved server instance slots.

23. The method as claimed in claim 21, wherein the selecting step comprises steps of:
checking if there are at least the minimum number of server instances running requests at the selected queue; and
selecting a next queue having next fewest allocated non-reserved server instance slots when there are at least the minimum number of server instances running requests at the selected queue.

24. The method as claimed in claim 22, wherein the selecting step comprises steps of:
checking if there are at least the minimum number of server instances running requests at the selected queue; and
selecting a higher queue having a higher priority to allow borrowing of a server instance by the higher queue.

25. A method for dispatching queued requests to a predetermined number of server instances, the method comprising steps of:
using a plurality of queues for queuing requests, each request having a service type, a service type being defined by a primary request parameter and one or more secondary request parameters, and each queue being used for queuing requests having a same primary request parameter;
reserving a minimum number of server instance slots for each queue, each server instance slot representing a potential server instance, each server instance having a current service type;
allocating one or more non-reserved server instance slots for one or more queues when the total number of server instances is larger than the sum of minimum numbers of reserved server instance slots for queues being used;
reallocating a non-reserved server instance slot to a different queue when the non-reserved server instance slot is free; and
dispatching a queued request from a queue to an idle server instance in a server instance slot allocated for the queue.

26. The method as claimed in claim 25, wherein the reallocating step comprises steps of:
selecting a queue having fewest allocated non-reserved server instance slots; and
reallocating the non-reserved server instance slot to the selected queue.

27. The method as claimed in claim 26, wherein primary request parameters of service types relate to priority, and the selecting step selects a higher queue having a higher priority primary request parameter if there are multiple queues having the fewest allocated non-reserved server instance slots.

28. The method as claimed in claim 26, wherein the selecting step comprises steps of:
checking if there are at least the minimum number of server instances running requests at the selected queue; and
selecting a next queue having next fewest allocated non-reserved server instance slots when there are at least the minimum number of server instances running requests at the selected queue.

29. The method as claimed in claim 27, wherein the selecting step comprises steps of:
checking if there are at least the minimum number of server instances running requests at the selected queue; and
selecting a higher queue having a higher priority to allow borrowing of a server instance by the higher queue.

30. A request dispatching system for dispatching requests to processing resources, the request dispatching system comprising:
a processing resource controller having a switch controller for controlling switching of an idle processing resource having a current service type to a different service type; and
a dispatching controller for dispatching an outstanding request having the different service type to the processing resource.

31. The request dispatching system as claimed in claim 30, wherein the switch controller comprises:
a request searcher for searching an outstanding request having the current service type; and
an identifier for identifying a service type of a currently outstanding request to switch the processing resource to the identified service type.

32. The request dispatching system as claimed in claim 31, wherein the switch controller has a comparator for comparing a expected period for a request having the current service type to arrive and a switching period for switching the processing resource to the identified service type to switch the processing resource when the expected period is longer than the switching period.

33. The request dispatching system as claimed in claim 30, wherein a service type is defined by a primary request parameter and one or more secondary request parameters, and the switching controller switches the processing resource to the different service type that has a same primary request parameter as the current service type.

34. A request dispatching system for dispatching queued requests to a predetermined number of server instances, the request dispatching system comprising:
a server instance controller having a switch controller for controlling switching of an idle server instance having a current service type to a different service type; and
a dispatching controller for dispatching an outstanding request having the different service type to the server instance..

35. The request dispatching system as claimed in claim 34, wherein the switch controller comprises:
a request searcher for searching an queued request having the current service type; and
an identifier for identifying a service type of a currently queued request to switch the server instance to the identified service type.

36. The request dispatching system as claimed in claim 35, wherein the switch controller has a comparator for comparing a expected period for a request having the current service type to arrive and a switching period for switching the server instance to the identified service type to switch the server instance when the expected period is longer than the switching period.

37. The request dispatching system as claimed in claim 34, wherein a service type is defined by a primary request parameter and one or more secondary request parameters, and the switching controller switches the server instance to the different service type that has a same primary request parameter as the current service type.

38. The request dispatching system as claimed in claim 34 further comprising a skip controller for allowing dispatching of a queued request having the current service type from a queue prior to one or more queued requests that have a different service type and arrived at the queue before the queued request having the current service type.

39. The request dispatching system as claimed in claim 34 further comprising an allocation controller for reserving a minimum number of server instance slots for each queue, each server instance slot representing a potential server instance; allocating one or more non-reserved server instance slots for one or more queues when the total number of server instances is larger than the sum of minimum numbers of reserved server instance slots for queues being used, and reallocating a non-reserved server instance slot to a different queue when the non-reserved server instance slot is free.

40. The request dispatching system as claimed in claim 34, wherein the allocation controller comprises a selector for selecting a queue having fewest allocated non-reserved server instance slots to reallocate the non-reserved server instance slot to the selected queue.

41. A computer readable memory for storing computer executable instructions for carrying out a method for dispatching requests to processing resources, the method comprising steps of:
determining if a processing resource is idle, the processing resource having a current service type to process requests that have the current service type;
determining if the processing resource is to be switched to a different service type to process requests having the different service type when the processing resource is idle;
switching the processing resource to the different service type when the switching is determined; and
dispatching an outstanding request having the different service type to the processing resource.

42. A computer readable memory for storing computer executable instructions for carrying out a method for dispatching queued requests to a predetermined number of server instances, the method comprising steps of:
using a plurality of queues for queuing requests, each request having a service type, a service type being defined by a primary request parameter and one or more secondary request parameters, and each queue being used for queuing requests having a same primary request parameter;
reserving a minimum number of server instance slots for each queue, each server instance slot representing a potential server instance, each server instance having a current service type;
allocating one or more non-reserved server instance slots for one or more queues when the total number of server instances is larger than the sum of minimum numbers of reserved server instance slots for queues being used;
reallocating a non-reserved server instance slot to a different queue when the non-reserved server instance slot is free; and
dispatching a queued request from a queue to an idle server instance in a server instance slot allocated for the queue.

43. Electronic signals for use in the execution in a computer of a method for dispatching requests to processing resources, the method comprising steps of:
determining if a processing resource is idle, the processing resource having a current service type to process requests that have the current service type;
determining if the processing resource is to be switched to a different service type to process requests having the different service type when the processing resource is idle;
switching the processing resource to the different service type when the switching is determined; and
dispatching an outstanding request having the different service type to the processing resource.

44. Electronic signals for use in the execution in a computer of a method for dispatching queued requests to a predetermined number of server instances, the method comprising steps of:
using a plurality of queues for queuing requests, each request having a service type, a service type being defined by a primary request parameter and one or more secondary request parameters, and each queue being used for queuing requests having a same primary request parameter;
reserving a minimum number of server instance slots for each queue, each server instance slot representing a potential server instance, each server instance having a current service type;
allocating one or more non-reserved server instance slots for one or more queues when the total number of server instances is larger than the sum of minimum numbers of reserved server instance slots for queues being used;
reallocating a non-reserved server instance slot to a different queue when the non-reserved server instance slot is free; and
dispatching a queued request from a queue to an idle server instance in a server instance slot allocated for the queue.
